## Europäisches Patentamt
## European Patent Office
## Office européen des brevets

(11) Publication number: **0 208 125**
**B1**

(12) **EUROPEAN PATENT SPECIFICATION**

(45) Date of publication of patent specification: **04.04.90**

(51) Int. Cl.⁵: **B 23 Q 3/155**

(21) Application number: **86107373.2**

(22) Date of filing: **28.09.83**

(60) Publication number of the earlier application in accordance with Art. 76 EPC: **0 106 595**

(54) Automatic tool exchange system for machine tools.

(30) Priority: **28.09.82 US 426188**

(43) Date of publication of application:
**14.01.87 Bulletin 87/03**

(45) Publication of the grant of the patent:
**04.04.90 Bulletin 90/14**

(84) Designated Contracting States:
**AT BE CH DE FR GB IT LI LU NL SE**

(56) References cited:
**EP-A-0 032 890**
**US-A-4 221 043**
**US-A-4 227 296**

(73) Proprietor: **Yang, Tai-Her**
**5-1 Tay Pyng St.**
**Shi Hwu Jenn Jang Huah Shiann (TW)**

(72) Inventor: **Yang, Tai-Her**
**5-1 Tay Pyng St.**
**Shi Hwu Jenn Jang Huah Shiann (TW)**

(74) Representative: **Arthur, Bryan Edward et al**
**Withers & Rogers 4 Dyer's Buildings Holborn**
**London EC1N 2JT (GB)**

Courier Press, Leamington Spa, England.

## Description

The present invention relates to an automatic tool exchange system for machine tools. This application is divided out of EP—A—0 106 595.

Where a number of operations are to be carried out successively on a workpiece by a machine tool it is known to mount the tools required for the operations on a turret, the turret being rotated between the operations to bring the correct tool into position.

In an alternative system the required tools are held in sequence in a tool chest and are successively transferred to an operating position in which they are coupled to the tool spindle.

EP—A—0 032 890 discloses a machine tool which is provided with several tool spindles so that one or more workpieces can be machined by different tools simultaneously. Tool exchange arms are provided so that tools from a common tool supply can be fitted to the various spindles. Such a machine tool is designed to overcome the technical problem of carrying out several machining operations on one or more workpieces with greater speed. The preamble of claim 1 is based on the disclosure of this reference.

US—A—4 221 043 uses a common tool supply and "X" shaped tool exchange arms to exchange the tools on two spindles simultaneously. The purpose of this tool exchanging system is to facilitate mass production where a number of identical workpieces are to be machined in the same sequence by a number of different tools.

By contrast to the above, the present invention is directed to the technical problem of improving the efficiency of machining where each tool spindle may be required to carry out a different operational sequence and is characterised by the features defined in the characterising clause of claim 1.

The invention will be described further with reference to the accompanying drawings, in which:

Fig. 1 shows the tool exchanging system in which tool turrets can be exchanged.

3-1 Machine body.
3-2 Work-table.
3-3 Work-table.
3-4 Lathe bed.
3-5 Lathe bed.
3-6 Mandrel.
3-7 Mandrel.
3-8 Mandrel.
3-9 Exchanging arm.
3-10 Exchanging arm.
3-11 Tool turret.
3-12 Tool turret.
3-13 Tool turret.
3-14 Tool turret.

Fig. 2 shows the tool operation flow chart of the system of Fig. 1.

The automatic tool changing means of this invention not only can be fitted to conventional tool exchanging means but also possesses many new features as follows:

a) Two or more than two sets of tool exchanging positions and exchanging arms (3-9) (3-10), are served by a single tool supply. The same set of tools can furnish separate tool spindles simultaneously, or each tool spindle may use one given set of tools in a specific sequence; one machine tool may have a plurality of tool spindles, or the tool spindles of different machine tools may share one tool supply.

A common tool supply structure having two or more than two sets of tool exchanging positions comprises tools, tool post, tool post base, the positioning and driving means, two or more than two sets of tool exchanging arms and related mechanical parts, and the positioning electric control means; and one tool supply may be used for supporting the mandrels of two or more than two sets of similar machines or different machines. Each tool exchanging position may be provided with a stand-by exchanging position, of which the position should facilitate the exchanging arm and the mandrel to exchange tools; and the tool displacement structure between the stand-by position and tool supply may be driven from the tool post base to the stand-by exchanging position by the auxiliary exchanging arm or the tool post; particularly when said spare tool is being moved to the stand-by position and before being exchanged with the tool on the mandrel, the tool supply base driving means may be continuously driven to the other tool output stand-by position.

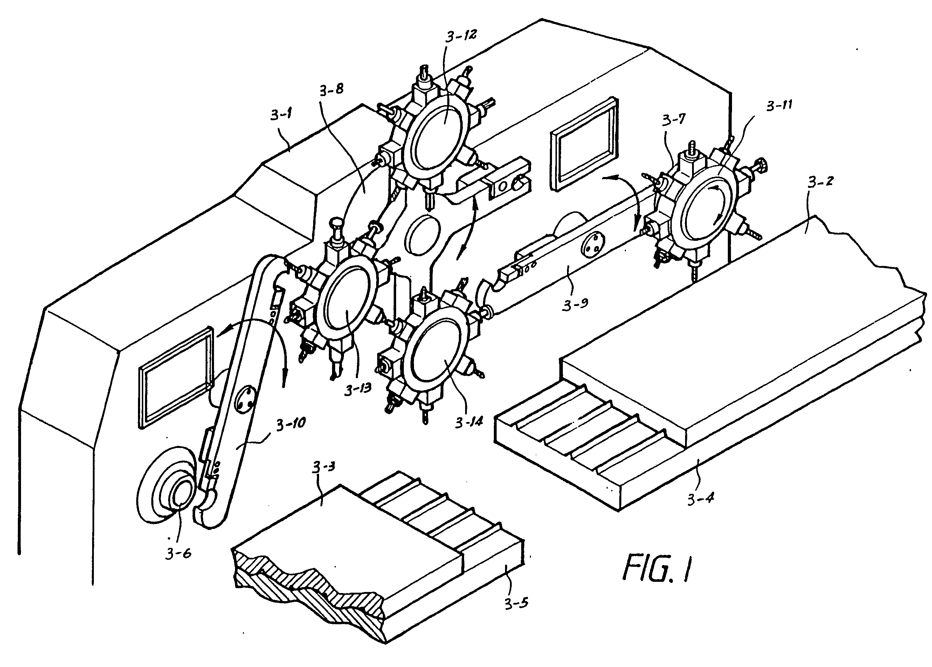

As shown in Fig. 1, tool turrets rather than individual tools are exchanged. The turrets not only have the conventional tool turret functions of angular rotation and locking, but also have a lockable coupling between the tool turret (3-11), (3-12), (3-13) and the tool spindle driving structure, and latching means for coupling to an exchanging arm (3-9), (3-10) after being unclamped from the spindle as shown in Fig. 1.

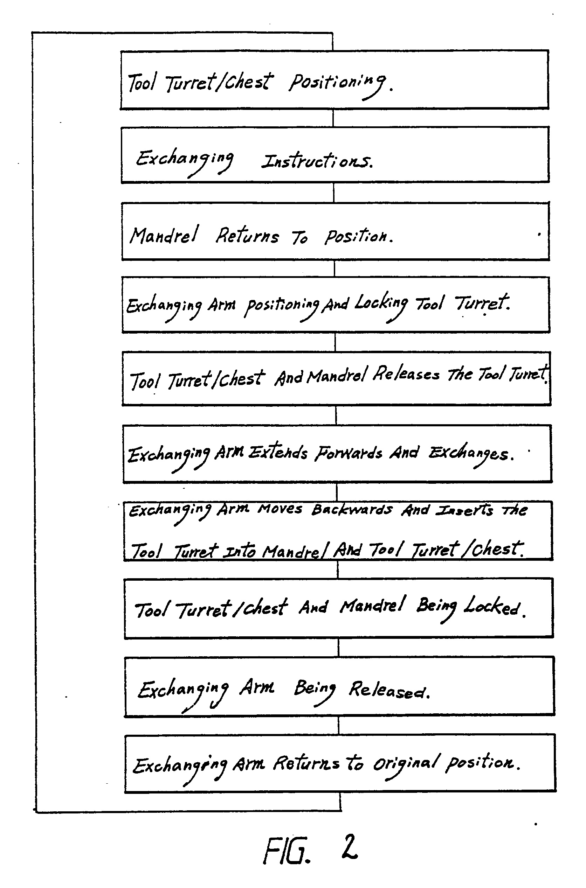

The flow chart of the tool turret exchanging operation is shown in Fig. 2. The sequence of tools used in processing may be mounted on one turret to simplify the tool exchange operation.

## Claims

1. An automatic tool exchange system for supplying tools to at least two tool spindles (3-6, 3-7) of the same or separate machine tool(s), each spindle (3-6, 3-7) being adapted to co-operate with a workpiece on a work table (3-2, 3-3), the system comprising a tool supply (3-8) and at least two tool exchanging arms (3-9, 3-10), whereby each spindle (3-6, 3-7) is associated with a respective, distinct tool exchanging arm (3-9, 3-10) which is independently controllable to provide to its associated spindle (3-6, 3-7) the tools required for the specific operational sequence of that spindle characterised in that the tool supply comprises tool turrets (3-12, 3-13, 3-14) mounted on a carrier (3-8), the turrets being transferred by the tool-exchanging arms (3-9, 3-10) to the machining positions (3-6, 3-7), and being rotated to bring the tools mounted on the turrets successively into operation.

2. An automatic tool exchange system according to claim 1, characterised in that a common tool supply serves two or more machine tools concurrently.

## Patentansprüche

1. Automatisches Werkzeugwechselsystem zum Zuführen von Werkzeugen an mindestens zwei Werkzeugspindeln (3-6, 3-7) derselben Werkzeugmachine oder getrennter Werkzeugmaschinen, wobei jede Spindel (3-6, 3-7) zur Zusammenarbeit mit einem Werkstück auf einem Arbeitstisch (3-2, 3-3) ausgebildet ist und das System einen Werkzeugvorrat (3-8) und zumindest zwei Werkzeugwechsel-Arme (3-9, 3-10) umfaßt, wodurch jede Spindel (3-6, 3-7) jeweils einem separaten Werkzeugwechsel-Arm (3-9, 3-10) zugeordnet ist, welcher unabhängig steuerbar ist, um der ihm zugeordneten Spindel (3-6, 3-7) die für die gegebene Bearbeitungsfolge dieser Spindel erforderlichen Werkzeuge zur Verfügung zu stellen, dadurch gekennzeichnet, daß der Werkzeugvorrat auf einen Träger (3-8) montierte Werkzeugrevolverköpfe (3-12, 3-13, 3-14) umfaßt, wobei die Revolverköpfe durch die Wechsel-Arme (3-9, 3-10) in die Bearbeitungspositionen (3-6, 3-7) befördert werden und gedreht werden, um die auf den Revolverköpfen montierten Werkzeuge nacheinander in Einsatz zu bringen.

2. Automatisches Werkzeugwechselsystem nach Anspruch 1, dadurch gekennzeichnet, daß ein gemeinsamer Werkzeugvorrat zwei oder mehr Werkzeugmaschinen gleichzeitig dient.

## Revendications

1. Système de changement automatique d'outils pour fournir des outils à au moins deux broches (3-6, 3-7) à outils de la même ou de machine(s)-outil(s) séparées, chaque broche (3-6, 3-7) étant prévue pour coopérer avec une pièce à usiner sur une table de fixation (3-2, 3-3), le système comprenant un magasin (3-8) d'outils et au moins deux bras (3-9, 3-10) de changement des outils, au moyen de quoi chaque broche (3-6, 3-7) est associée avec un bras (3-9, 3-10) de changement des outils distinct correspondant qui est commandé indépendamment pour fournir à sa broche associée (3-6, 3-7) les outils nécessités pour la séquence opérationnelle spécifique de cette broche, caractérisé en ce que le magasin d'outils comprend des têtes révolver (3-12, 3-13, 3-14) montées sur un support (3-8), les têtes révolver étant transférées par les bras (3-9, 3-10) de changement des outils vers les positions (3-6, 3-7) d'usinage et étant entraînées en rotation pour amener successivement en fontionnement les outils montés sur les têtes révolver.

2. Système selon la revendication 1, caractérisé en ce qu'un jeu d'outils commun sert concurremment pour au moins deux machines-outils.

FIG. 1

Tool Turret/Chest Positioning.

Exchanging Instructions.

Mandrel Returns To Position.

Exchanging Arm positioning And Locking Tool Turret.

Tool Turret/Chest And Mandrel Releases The Tool Turret.

Exchanging Arm Extends Forwards And Exchanges.

Exchanging Arm Moves Backwards And Inserts The Tool Turret Into Mandrel And Tool Turret/Chest.

Tool Turret/Chest And Mandrel Being Locked.

Exchanging Arm Being Released.

Exchanging Arm Returns to Original position.

FIG. 2